# EUROPEAN PATENT APPLICATION

(11) **EP 3 521 331 A1**
(43) Date of publication of application: **07.08.2019**
(21) Application number: 18155238.1
(22) Date of filing: 06.02.2018
(51) Int. Cl.: C08G 18/48, C08G 18/50, C08G 18/76

(54) **POLYURETHANE FOAM COMPOSITE PANEL**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a polyurethane foam composite panel for thermal insulation and a method for preparing the composite panel. The composite panel comprises two surface layers and a polyurethane foam layer located therebetween, wherein the polyurethane foam is prepared from the reaction system consisting of various components such as polyisocyanate, polyol, blowing agent and catalyst package. The blowing agent comprises HFO-1336MZZ. The polyurethane foam composite panel according to the present invention shows both good insulation performance and mechanical strength.

## Description

### Technical Field

The present invention relates to a polyurethane foam composite panel, especially a rigid polyurethane foam composite panel for thermal insulation, and a method for preparing the composite panel.

### Background

In modern life and production, products are usually needed to be maintained at certain temperatures and transported for long distance. For example, meat and fruits needed in people's daily life require refrigerated transportation. During transportation, it is very crucial to keep the temperature in certain ranges, which requires good thermal insulation performance of the foam used to produce these thermal insulated reefer/trailer. As a good thermal insulation material, the rigid polyurethane foam has been widely used.

CN105440302A provides a polyurethane or polyisocyanurate composite panel and a method for manufacturing the polyurethane or polyisocyanurate composite panel by a continuous production line. Through selecting the components of the blowing agent composition, the foaming height represents at least 65%, preferably at least 75% of the highest free-rise foaming height at the contacting time, so that the anisotropy of the polyurethane composite panel manufactured by the continuous production line is improved, especially the compressive strength in the thickness direction and the proportion of the compressive strength in the thickness direction in the overall compressive strength in three directions are increased, thus the dimensional stability of the polyurethane composite panel is improved.

CN101044180A proposes a method for producing a rigid polyurethane foam involving reacting a polyisocyanate with a blend containing at least hydrogen atoms reactive to isocyanate groups in the presence of blowing agent to produce the rigid polyurethane foam. To the polyether polyol system, in addition to conventional polyethers with high functionality and high hydroxyl value, a substantial amount of polyester is introduced, which imparts the system very good thermal insulation properties.

AU2016200022A1 discloses a foaming process with a blend of the blowing agent HFO-1336MZZ and various existing blowing agents and describes especially the thermal insulation properties of the foam.

Although the above existing solutions, there is an urgent need in the market for a polyurethane foam composite panel that meets environmental requirement while shows good thermal insulation properties.

### Summary of the Invention

A technical problem to be solved by the present invention is that the blowing agent HFO-1336MZZ will impart the polyurethane foam a high brittleness during the foaming process, thus affecting the adhesion between the foam and the two surface layers.

In order to solve the above technical problem, one aspect of the present invention is to provide a polyurethane foam composite panel for thermal insulation. The composite panel comprises two surface layers and a polyurethane foam layer located there between, wherein the polyurethane foam is prepared from the reaction system comprising the following components:
A) a polyisocyanate;
B) a polyol;
C) a blowing agent comprising HFO-1336MZZ; and
D) catalysts comprising a composite catalyst of foaming catalyst, gelling catalyst and trimerization catalyst.

Another aspect of the present invention is to provide a method for preparing the polyurethane foam composite panel through the following non-continuous process: fixing the two surface layers; and injecting the polyurethane reaction mixture between the two surface layers, wherein the polyurethane reaction components react and foam to form the polyurethane foam composite panel. The polyurethane foam is prepared from the reaction system comprising the following components:
A) a polyisocyanate;
B) a polyol;
C) a blowing agent comprising HFO-1336M ZZ; and
D) catalysts comprising a composite catalyst of foaming catalyst, gelling catalyst and trimerization catalyst, in an amount of 0.80∼3.00pbw.

Still another aspect of the present invention is to provide use of the polyurethane foam composite pane in preparation of a reefer/trailer.

Yet another aspect of the present invention is to provide a reefer/trailer, comprising the above polyurethane foam composite panel. The polyurethane composite panel prepared according to the present invention may be used to produce a reefer/trailer, directly or after being cut or subjected to additional necessary subsequent treatments as required.

The reaction system further comprises a fire retardant comprising a halogen containing fire retardant or non-halogen phosphorus-based fire retardant. The dosage of fire retardant is in an amount of 10∼20 pbw.

The reaction system may further comprise a surfactant, preferably silicone oil, in an amount of 1∼5 pbw.

The reaction system further comprises water in an amount of 1.0∼3.0 wt%, preferably of 1.5∼2.0wt%, based on that the total weight of the components except component A) and component C) in the polyurethane foam reaction system is 100wt%.

The NCO content of the A) polyisocyanate component is 20-33 wt.%, preferably 25-32wt.%, particularly preferably 30-32 wt%. The NCO content is measured in accordance with GB/T 12009.4-2016.

The B)polyol component preferably comprises: difunctional polyether polyol, in an amount of 5∼20 pbw, preferably of 5∼15 pbw, with a viscosity at 25°C of <300mPa·s, preferably of <200mPa.s (measured in accordance with GB/T 12008.8-1992); polyether polyol with a high functionality and a low hydroxyl value with a functionality >4 (measured in accordance with the formula in the art: functionality = hydroxyl value*molecular weight/56100; the molecular weight determined by GPC. The same applies hereinafter.), in an amount of 45∼80 pbw, preferably of 15∼25 pbw; polyether polyol started with an aromatic amine in an amount of 10∼35 pbw, preferably of 15∼25 pbw, with a viscosity at 25°C of <30000 mPa·s.

The component B) polyol has a functionality of 3.5-6, preferably of 4.0-5.5, a hydroxyl value of 310∼500 mgKOH/g, preferably of 320∼400 mgKOH/g.

The component C)blowing agent is preferably a mixture of HFO-1336MZZ and cyclopentane, wherein HFO-1336MZZ is present in an amount of 4∼20pbw, preferably of 5∼15pbw and cyclopentane is present in an amount of 2∼10 pbw, preferably of 3∼9 pbw.

The two surface layers of the composite panel may be made of a material selected from metal, FRP(Fiber Reinforced Polymer/Plastic, FRP for short), PS(Polystyrene, PS for short) or ABS(acrylonitrile-butadiene-styrene copolymer, ABS for short).

When used for preparing a reefer/trailer, the polyurethane foam layer of the polyurethane foam composite panel provided according to the present invention may be in a suitable thickness according to practical needs, preferably in a range of 30∼200 mm.

The polyurethane foam reaction system employed in the preparation method for the polyurethane foam composite panel provided according to the present invention has a good flowability, and the resultant polyurethane foam shows excellent adhesion properties with the two surface layers. Therefore, the polyurethane foam composite panel provided according to the present invention shows good both thermal insulation performance and mechanical strength.

### Detailed Description of the Invention

The following terms used in the present application have the following meanings or interpretations.

Adhesion strength refers to the strength at break when a load applied to the bonding part.

Thermal conductivity refers to the heat transferred through an area of 1 m² by per unit thickness of a material per unit temperature difference and time under the conditions for stable heat transfer.

Free rise density refers to the density measured in the foam center after the polyurethane reaction mixture rises freely until the end of the reaction at atmospheric environment.

Core density refers to the density measured in the foam center in the case that the mold used is filled excessively during the manufacture of the polyurethane foam composite panel, i.e., core density of molded foam.

pbw refers to parts by weight of each component in the polyurethane reaction system.

Functionality refers to the value measured in accordance with the formula in the art: functionality = hydroxyl value*molecular weight/56100; wherein the molecular weight is determined by GPC High Performance Liquid Chromatography.

### Each Component in the Polyurethane Foam Reaction System

### A) polyisocyanate

Any organic polyisocyanate may be used for preparing the rigid polyurethane foam according to the present invention, including aromatic, aliphatic and cycloaliphatic polyisocyanates and a combination thereof. The polyisocyanate may be represented by the general formula R(NCO)n, wherein R represents an aliphatic hydrocarbon group containing 2-18 carbon atoms, an aromatic hydrocarbon group containing 6-15 carbon atoms, an aromatic-aliphatic hydrocarbon group containing 8-15 carbon atoms, and n>2.

Useful polyisocyanates include, but not limited to, vinyl diisocyanate, tetramethylene 1,4-diisocyanate, hexamethylene diisocyanate(HDI), dodecyl 1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane, hexahydrotoluene-2,4-diisocyanate, hexahydrophenyl-1,3-diisocyanate, hexahydrophenyl-1,4-diisocyanate, perhydro-diphenylmethane 2,4-diisocyanate, perhydro-diphenylmethane 4,4-diisocyanate, phenylene 1,3-diisocyanate, phenylene 1,4-diisocyanate, stilbene 1,4-diisocyanate, 3,3-dimethyl 4,4-diphenyldiisocyanate, toluene-2,4-diisocyanate(TDI), toluene-2,6-diisocyanate(TDI), diphenylmethane-2,4'-diisocyanate(MDI), diphenylmethane-2,2' -diisocyanate(MDI), diphenylmethane-4,4' -diisocyanate(MDI), diphenylmethane diisocyanate and/or mixtures of its homologues with more rings, polyphenyl methane polyisocyanate (polymeric MDI), naphthalene-1,5-diisocyanate(NDI), their isomers, and any mixture with their isomers.

Useful polyisocyanates further include the isocyanates obtained through modification with carbodiimide, allophanate or isocyanate, preferably, but not limited to, diphenylmethane diisocyanate, diphenylmethane diisocyanates modified with carbodiimide, their isomers, and any mixtures with their isomers.

When used in the present invention, the polyisocyanates include dimers, trimers, tetramers of isocyanate or combinations thereof.

In a preferable example according to the present invention, the polyisocyanate component is selected from polymeric MDI.

The NCO content of the organic polyisocyanate according to the present invention is 20-33 wt%, preferably 25-32 wt%, particularly preferably 30-32 wt%. The NCO content is measured in accordance with GB/T 12009.4-2016.

The organic polyisocyanates may also be used in the form of polyisocyanate prepolymers.

These polyisocyanate prepolymer may be obtained by reacting the above organic polyisocyanates in excess amount with a compound having at least two isocyanate reactive groups at a temperature of 30-100°C, for example, and preferably of about 80°C. The NCO content of the polyisocyanate prepolymer according to the present invention is preferably 20-33 wt%, preferably 25-32 wt%. The NCO content is measured in accordance with GB/T 12009.4-2016.

### B)polyol

The polyol according to the present invention may be selected from polyether polyols, polyester polyols, polycarbonate polyols and/or mixtures thereof.

The polyol according to the present invention is preferably one or more polyether polyols, wherein at least one polyether polyol is started with amines. The polyether polyol has a functionality of 2-8, preferably of 3-6, and a hydroxyl value of 50-1200, preferably of 200-800.

The polyether polyol may be prepared through known processes. Typically, it is prepared by reacting ethylene oxide or propylene oxide with ethylene glycol, 1,2-propanediol, 1,3-propanediol, diethylene glycol, glycerol, trimethylolpropane, pentaerythritol, triethanolamine, toluenediamine, sorbitol, sucrose or any combinations thereof as a starting material.

Moreover, the polyether polyol may be prepared by reacting at least one olefin oxide containing an alkylene group with 2-4 carbon atoms with a compound containing 2-8, preferably but not limited to 3-8 reactive hydrogen atoms or other reactive compounds in the presence of catalyst.

Examples of the catalyst include alkali metal hydroxides such as sodium hydroxide, potassium hydroxide or alkoxides of alkali metals such as sodium methoxide, sodium ethoxide or potassium ethoxide or potassium isopropoxide.

Useful olefin oxides include, preferably but not limited to, tetrahydrofuran, ethylene oxide, 1,2-propylene oxide, 1,2-epoxybutane, 2,3-epoxybutane, styrene oxide and any mixture thereof.

Useful compounds containing reactive hydrogen atoms include polyhydroxy compounds, preferably but not limited to, water, ethylene glycol, 1,2-propanediol, 1,3-propanediol, diethylene glycol, trimethylolpropane, any mixture thereof, and more preferably polyols, particularly trihydric alcohols or alcohols with more than three hydroxyl groups, such as glycerol, trimethylolpropane, pentaerythritol, sorbitol and sucrose. Useful compounds containing reactive hydrogen atoms further include, preferably but not limited to, organic dicarboxylic acids such as succinic acid, hexanedioic acid, phthalic acid and terephthalic acid, or aromatic or aliphatic substituted diamines such as ethylenediamine, diethylenetriamine, triethylene tetramine, propanediamine, butanediamine, hexanediamine or toluenediamine.

Other reactive compounds that are useful include ethanolamine, diethanolamine, methylethanolamine, ethylethanolamine, methyldiethanolamine, ethyldiethanolamine, triethanolamine and ammonia.

The polyether polyols prepared with an amine as the starting material include the compounds obtained by reacting the amines as the starting material with an alkylene oxide compound.

When used in the present invention, the term "alkylene oxide compound" typically refers to those having the following general formula (I): 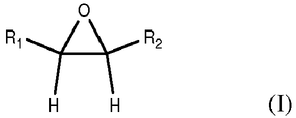 wherein R₁ and R₂ are independently selected from H, C₁-C₆ linear and branched alkyl groups, phenyl and substituted phenyl.

Preferably, R₁ and R₂ are independently selected from H, methyl, ethyl, propyl and phenyl.

Those skilled in the art have already known preparation methods for the "alkylene oxide compound", which, for example, may be obtained by oxidation of an olefin compound.

Examples that may be used as the alkylene oxide compound according to the present invention include, but not limited to: ethylene oxide, 1,2-propylene oxide, 1,2-epoxybutane, 2,3-epoxybutane, styrene oxide or mixtures thereof, particularly preferably a mixture of ethylene oxide and 1,2-propylene oxide.

When used in the present invention, the term "alkylene oxide compound" further comprises oxacycloalkanes, examples thereof include but not limited to tetrahydrofuran and oxetane.

When used in the present invention, the term "amine" refers to a compound containing a primary amine group, a secondary amine group, a tertiary amine group or a combination thereof. Examples of compounds that may be used as the amine according to the present invention include, but not limited to: triethanolamine, ethylenediamine, toluenediamine, diethylenetriamine, triethylene tetramine and derivatives thereof, preferably ethylenediamine, toluenediamine, and most preferably toluenediamine.

Examples of polyether polyols that may be used according to the present invention are selected from polyether polyols started with an aromatic amine, preferably propylene oxide-based polyether polyols started with diphenylmethane diamine. The polyether polyol started with diphenylmethane diamine and/or toluenediamine has a functionality of 3.6-4.4, a hydroxyl value of 290∼4200 mgKOH/g, in an amount of 10∼35 pbw, preferably of 15∼25 pbw, and with a viscosity at 25°C of <30000mPa•s (measured in accordance with GB/T 12008.8-1992, the same applies below).

The polyether polyols that may be used according to the present invention further include difunctional polyether polyols and polyether polyols with a high functionality and a low hydroxyl value.

The difunctional polyether polyol that may be used according to the present invention typically has a functionality of 1.6-2.4, a hydroxyl value of 60∼140 mgKOH/g (measured in accordance with GB/T12008.3-2009), in an amount of 5∼30 pbw, preferably of 5∼15 pbw, and with a viscosity at 25°C of <300 mPa•s, preferably of <200 mPa.s. In the examples of the present invention, part of the polyether polyols are selected from those started with 1,2-propanediol or 1,3-propanediol, and more preferably, part of the polyether polyols are selected from propylene oxide-based polyether polyols started with 1,2-propanediol.

The polyether polyol with a high functionality (functionality >4) and a low hydroxyl value that may be used according to the present invention is present in an amount of 45∼80 pbw, preferably of 50∼75 pbw. In one example of the present invention, part of the polyether polyols are selected from those started with sucrose and sorbitol, and more preferably, part of the polyether polyols are selected from propylene oxide-based polyether polyols started with sucrose and sorbitol.

The polyether polyol composition comprising the above polyether polyols has a functionality of 3.5∼6, preferably of 4.0∼5.5, a hydroxyl value of 310∼500 mgKOH/g, preferably of 320∼400 mgKOH/g.

The polyester polyol is prepared by reacting a dicarboxylic acid or dicarboxylic acid anhydride with a polyol. The dicarboxylic acid is preferably but not limited to aliphatic carboxylic acid containing 2-12 carbon atoms, such as succinic acid, malonic acid, glutaric acid, adipic acid, octanedioic acid, azelaic acid, sebacic acid, dodecanoic acid, maleic acid, fumaric acid, phthalic acid, isophthalic acid, terephthalic acid, and mixtures thereof. The dicarboxylic acid anhydride is preferably but not limited to phthalic anhydride, tetrachlorophthalic anhydride, maleic anhydride, and mixtures thereof. The polyol is preferably but not limited to ethylene glycol, diethylene glycol, 1,2-propanediol, 1,3-propanediol, dipropylene glycol, 1,3-methylpropanediol, 1,4-butanediol, 1,5-pentanediol, 1,6-hexanediol, neopentyl glycol, 1,10-decanediol, glycerol, trimethylolpropane or mixtures thereof. The polyester polyol further includes the polyester polyol prepared from lactone. The polyester polyol prepared from lactone is preferably but not limited to those prepared from ε-caprolactone.

The polycarbonate polyol is preferably but not limited to polycarbonate diol. The polycarbonate diol may be prepared by reacting a diol with a dialkyl carbonate or diaryl carbonate or phosgene. The diol is preferably but not limited to 1,2-propanediol, 1,3-propanediol, 1,4-butanediol, 1,5-pentanediol, 1,6-hexanediol, diethylene glycol, trioxane diol, or mixtures thereof. The dialkyl carbonate or diaryl carbonate is preferably but not limited to diphenyl carbonate.

### Blowing agent

The blowing agent of the present invention may be selected from various physical blowing agents or chemical blowing agents.

Useful blowing agents include water, halogenated hydrocarbons, hydrocarbon compounds and the like. Useful halogenated hydrocarbons are preferably pentafluorobutane, pentafluoropropane, chlorotrifluoropropylene, hexafluorobutene, HCFC-141b (fluorodichloroethane), HFC-365mfc (pentafluorobutane), HFC-245fa (pentafluoropropane) or any mixtures thereof. Useful hydrocarbon compounds preferably include butane, pentane, cyclopentane (CP), hexane, cyclohexane, heptanes and any mixtures thereof.

In the prior art, when HFO-1336MZZ is used for polyurethane foaming, the foam thus manufactured is very brittle, affecting the adhesion between the foam and the two surface layers adversely. In the present invention, the rigid polyurethane foam system developed for HFO-1336MZZ may not only reduce the thermal conductivity of the foam, but also may alleviate the brittleness problem of the foam resulted from the HFO-1336MZZ introduction.

The blowing agent of the present invention is particularly preferably the mixture of cyclopentane and HFO-1336MZZ. Particularly, in the polyurethane foam reaction system according to the present invention, the polyurethane foam reaction system comprising a combination of 3∼7 pbw of CP and 9∼15 pbw of HFO-1336MZZ has a good flowability, and the foam prepared shows better thermal insulation properties, adhesion strength and compressive strength. Specifically, HFO-1336MZZ and cyclopentane are present in amounts of 4∼20 pbw and 2∼10 pbw, respectively; preferably HFO-1336MZZ and cyclopentane are present in amounts of 5∼15 pbw and 3∼9 pbw, respectively.

### Catalyst

Among the catalysts of the present invention, the foaming catalyst is selected from one, any mixture of two or more of the following: pentamethyldiethylene triamine, bis(dimethylamino ethyl)ether, N,N,N',N'-tetramethylethylenediamine, N,N,N',N'-tetramethylbutanediamine and tetramethylhexanediamine; the gelling catalyst is selected from one or any mixture of dimethylcyclohexylamine and dimethylbenzylamine; the trimerization catalyst is selected from one, any mixture of two or more of the following: methylammonium salts, ethylammonium salts, octylammonium salts or hexahydrotriazine and organic metal bases. The catalyst of the present invention is preferably present in a amount of 0.80∼3.00 pbw.

The polyurethane foam reaction system of the present invention further comprises water in an amount of 1.0∼3.0wt%, preferably of 1.5∼2.0wt%, based on the total weight of the components except the polyisocyanate and the blowing agent in the polyurethane foam reaction system.

The polyurethane foam reaction system of the present invention further comprises a surfactant, which is preferably but not limited to oxyethylenated derivatives of silicones. The surfactant is used in an amount of 1∼5 pbw relative to the total amount of the polyols present in the reaction system for preparing polyurethane, which comprise not only the polyols used as reactive components, but also the polyols used in other components.

### Polyurethane Foam Composite Panel

In one aspect of the present invention, there provides a polyurethane foam composite panel for thermal insulation. The composite panel comprises two surface layers and a polyurethane foam layer located therebetween, wherein the polyurethane foam is prepared from the reaction system comprising the following components:
A) a polyisocyanate;
B) a polyol;
C) a blowing agent comprising HFO-1336MZZ;
D) catalysts comprising a composite catalyst of foaming catalyst, gelling catalyst and trimerization catalyst.

The reaction system further comprises a fire retardant comprising a halogen containing fire retardant or a non-halogen phosphorus-based fire retardant, in an amount of 10∼20 pbw.

The reaction system further comprises a surfactant, preferably silicone surfactant, in an amount of 1∼5 pbw.

The reaction system further comprises water in an amount of 1.0∼3.0wt%, preferably of 1.5∼2.0wt%, based on that the total weight of the components except component A) and component C) in the polyurethane foam reaction system is 100 wt%. When water is used as the chemical blowing agent, it is typically added to the polyol component. It is well known to those skilled in the art that, theoretically, the lower the water content is, the higher the amount of the physical blowing agent is, and thus the lower the thermal conductivity of the rigid polyurethane system is. However, the inventors have surprisingly found that, when water is present in a content of 1.5∼2.0 wt%, the thermal conductivity of the polyurethane foam prepared from the system will be lower.

B)polyol preferably comprises: a difunctional polyether polyol, in an amount of 5∼20 pbw, preferably of 5∼15 pbw, with a viscosity at 25°C of <300mPa·s, preferably of <200mPa.s (measured in accordance with GB/T 12008.8-1992); a polyether polyol with a high functionality and a low hydroxyl value, with a functionality of >4, in an amount of 45∼80 pbw, preferably of 50∼75 pbw; a polyether polyol started with aromatic amine, in an amount of 10∼35 pbw, preferably of 15∼25pbw, with a viscosity at 25°C of <30000mPa·s.

It is well known to those skilled in the art that adding polyether polyol with a low functionality and a low viscosity to the reaction system may increase the flowability of the reaction system, thus enhancing the bonding strength between the foam and the panel materials. After repeated experiments, the inventors have surprisingly found that the polyurethane foam prepared by the reaction system comprising a difunctional polyether polyol shows a lower yield point deformation and a higher bonding strength compared with that prepared by the reaction system comprising a trifunctional polyether polyol, thus being a more preferable solution.

In the examples of the present invention, the organic polyisocyanates include the isocyanates based on diphenylmethane diisocyanate, such as polymeric MDI. The organic polyisocyanates have preferably a functionality of 1.9-3.5, particularly preferably of 2.5-3.3. The organic polyisocyanates have preferably a viscosity of 100-600 mPas, particularly preferably of 150-300 mPas, which is measured at 25°C in accordance with GB 12009.3-89. The polyisocyanate component may be present in a content of 20-60 wt.%, based on that the total weight of various components of the polyurethane foam reaction system is 100 wt.%.

In the examples of the present invention, all of the polyether polyols are selected from propylene oxide-based polyether polyols.

In the examples of the present invention, the blowing agent comprises HFO-1336MZZ or a mixture of HFO-1336MZZ and cyclopentane. Among the co-blown systems of cyclopentane and HFO-1336MZZ, the foam produced via a combination of 3∼7 pbw of cyclopentane with 9∼15 pbw of HFO-1336MZZ shows good flowability, thermal insulation properties and mechanical properties.

In the examples of the present invention, the core density of the polyurethane foam is 35∼70 kg/m³.

In the examples of the present invention, the closed cell ratio of the polyurethane foam is 85∼98%.

The polyurethane foam is a microcellular foam, microcells of which have an average diameter of less than 0.35 mm. The diameter of the microcell is measured under a magnifier.

The various components of the present invention such as the polyisocyanate and the polyol have good compatibility with the blowing agent, thus being capable of producing uniform polyurethane foam with excellent quality and good thermal insulation properties. Meanwhile, the polyurethane foam prepared is superior in adhesion performance , capable of bonding well with the two surface layers with great bonding strength, thus ensuring sufficient strength of the composite panel.

### Preparation Method for Polyurethane Foam Composite Panel

In another aspect of the present invention, there provides a method for preparing the polyurethane foam composite panel through a dis-continuous process. The method comprises the following steps: preparing or obtaining a mold comprising a cavity; selecting panels such as steel plates, aluminum plates or others suitable as the surface layers to be placed onto the two inner surfaces of the mold; injecting various reactive components of the polyurethane reaction system that has been mixed sufficiently in proportion between the two surface layers and taking out the polyurethane foam composite panel from the mold once it can be released therefrom.

In the examples of the present invention, the composite panel is in a shape of a plate or a hollow cylinder.

The polyurethane composite panel prepared through the dis-continuous process may be used in the roof panel, side panel, base panel or door panel of r reefer/trailer; roof panel, side panel, base panel or door panel of portable dwelling; roof panel, side panel, base panel or door panel of refrigeration house; thermal insulation panel of air conditioner; thermal insulation pipeline, and the like.

### Use of the Polyurethane Foam Composite Panel in Preparation of Reefer/Trailer

In a still another aspect of the present invention, there provides use of the polyurethane foam composite panel in the preparation of a reefer/trailer.

### Reefer/Trailer

In a yet another aspect of the present invention, there provides a reefer/trailer, comprising the above polyurethane foam composite panel.

### Examples

Raw Materials:
Arcol Polyol 1011, PO-type polyether polyol started with PG, supplied by Covestro Polymer (China) Co., Ltd., hydroxyl value: 100 mgKOH/g, viscosity(25°C): 160 mPa.s;
Desmophen 4030M, PO-type polyether polyol started with sucrose, supplied by Covestro Polymer (China) Co., Ltd., hydroxyl value: 380 mgKOH/g, viscosity(25°C): 11250 mPa.s;
NJ4110A, PO-type polyether polyol started with sucrose, purchased from Jurong Ningwu New Material Co. Ltd., hydroxyl value: 430 mgKOH/g, viscosity(25°C): 3000 mPa.s;
NJ 635C, PO-type polyether polyol started with sorbitol, purchased from Jurong Ningwu New Material Co. Ltd., hydroxyl value: 500 mgKOH/g, viscosity(25°C): 5800 mPa.s.
Desmophen Z450, PO-type polyether polyol started with o-TDA, purchased from Covestro Polymer (China) Co., Ltd., hydroxyl value: 345 mgKOH/g, viscosity(25°C): 12000 mPa.s;
NJ303E, PO-type polyether polyol stared with glycerol, purchased from Jurong Ningwu New Material Co. Ltd., hydroxyl value: 475 mgKOH/g, viscosity(25°C): 475 mPa.s;
YD4502, PO-type polyether polyol started with sucrose, purchased from Yadog Group, hydroxyl value: 450 mgKOH/g, viscosity(25°C): 18000 mPa.s;
TCPP, fire retardant, purchased from Jiangsu Yoke Technology Co., Ltd.;
Niax L6920, foam stabalizer, purchased from Momentive Performance Materials (China) Co., Ltd.;
HFO-1336MZZ, blowing agent, purchased from the Chemours Company;
Cyclopentane, purchased from Guangzhou Meilong Company;
Dabco Polycat 41, catalyst for polyurethane synthesis, purchased from Air Products and Chemicals (China), Co., Ltd.;
Dabco Polycat 5, catalyst for polyurethane synthesis, purchased from Air Products and Chemicals (China), Co., Ltd.;
Dabco Polycat 8, catalyst for polyurethane synthesis, purchased from Air Products and Chemicals (China), Co., Ltd.;
Desomdur® 44v20L, isocyanate, NCO content: 31.5 wt.%, purchased from Covestro Polymer (China) Co., Ltd.

### Flowability test:

In the examples of the present invention, the flowability of the polyurethane foam reaction system is tested with climbing tube. For different reaction systems with the same free-rising density and reaction speed, the higher the final height, the better the flowability of the system.

### Various tests for molded foams:

Various components of the polyurethane foam reaction system were mixed in proportion, stirred and then poured into a mold, the temperature of which was controlled to a set temperature. The foam was taken out after a pre-determined curing time and various characters of the foam such as core density, thermal conductivity and compressive strength were measured.

Adhesion test is carried out in accordance with GB9641-1988, to give the adhesion strength between the polyurethane foam and the two surface layers.

Compressive strength test is carried out in accordance with GB8813-2008.

Viscosity test is carried out in accordance with GB/T 12008.8-1992.

Thermal conductivity test is carried out in accordance with GB3399-1982.

| **Table 1- Examples 1-5** | | | | | | | |
|---|---|---|---|---|---|---|---|
| | | | 1# | 2# | 3# | 4# | 5# |
| Polyether Polyol 1 | Arcol Polyol 1011 | pbw | 10 | 10 | 10 | 10 | 10 |
| Polyether Polyol 2 | Desmophen 4030M | pbw | 70 | 70 | 70 | 70 | 70 |
| Polyether Polyol 3 | Desmophen Z450 | pbw | 20 | 20 | 20 | 20 | 20 |
| Fire Retardant | TCPP | pbw | 10 | 10 | 10 | 10 | 10 |
| Silicone Oil | Niax L6920 | pbw | 2 | 2 | 2 | 2 | 2 |
| Trimerizatio n Catalyst | Polycat 41 | pbw | 0.3 | 0.3 | 0.3 | 0.3 | 0.3 |
| Gelling Catalyst | PC 8 | Pbw | 1.25 | 0.95 | 0.77 | 0.61 | 0.46 |
| Water | Water Content in Combined Polyether Polyol* | % | 0.51 | 1.00 | 1.50 | 2.00 | 2.50 |
| Formulation Ratio | Combined Polyether Polyol* | pbw | 100 | 100 | 100 | 100 | 100 |
| | HFO-1336MZZ | pbw | 32 | 27 | 23 | 18 | 14.5 |
| | 44v20L | pbw | 104 | 112 | 121 | 128 | 137 |
| Tests | Temperature | °C | 20 | | | | |
| | Gelling Time | Sec | 199 | 200 | 197 | 199 | 195 |
| | Free-rising Density | kg/m³ | 33.3 | 33.1 | 32.8 | 32.6 | 32.7 |
| Flowability | Foam Height | cm | 81.6 | 87.1 | 90.8 | 90.8 | 90.5 |
| Results of Foam Physical Property Test | Core Density | kg/m³ | 49.6 | 48.6 | 48.8 | 48.9 | 48.7 |
| | Thermal Conductivity, 25°C | mW/m* K | 22.41 | 20.99 | 20.52 | 21.17 | 21.84 |
| | Compressive Strength | ⊥, Kpa | 227.2 | 244.7 | 266.3 | 282.7 | 291.2 |
| | | ⊥, Kpa | 245.7 | 252.8 | 272.7 | 287.7 | 281.1 |
| | | //, Kpa | 282.5 | 291.3 | 307.3 | 328.7 | 339.4 |
| Conclusion | It can be seen from the above data that: in the HFO-1336MZZ foaming system, better overall performance can be achieved by the foam prepared with polyether polyol containing 1.5∼2.0% of water. | | | | | | |

| | | | | | | | |
|---|---|---|---|---|---|---|---|
| *Note: the combined polyether polyol in Tables 1 and 2 refers to the mixture of polyether polyol 1, 2 and 3, as well as the fire retardant, catalyst, surfactant and water. | | | | | | | |

The results of Examples 1-5 listed in Table 1 demonstrate that for a polyurethane foam reaction system containing HFO-1366MZZ as blowing agent, better overall performance (lower thermal conductivity and higher compressive strength) can be achieved by the foam prepared with polyether polyol containing 1.50∼2.00 wt% of water.

| Table 2 - Examples 6-10 | | | | | | | |
|---|---|---|---|---|---|---|---|
| | | | 6# | 7# | 8# | 9# | 10# |
| Polyether Polyol 1 | Arcol Polyol 1011 | pbw | 10 | 10 | 10 | 10 | 10 |
| Polyether Polyol 2 | Desmophen 4030M | pbw | 70 | 70 | 70 | 70 | 70 |
| Polyether Polyol 3 | Desmophen Z450 | pbw | 20 | 20 | 20 | 20 | 20 |
| Fire Retardant | TCPP | pbw | 10 | 10 | 10 | 10 | 10 |
| Silicone Oil | Niax L6920 | pbw | 2 | 2 | 2 | 2 | 2 |
| Trimerization Catalyst | Polycat 41 | pbw | 0.3 | 0.3 | 0.3 | 0.3 | 0.3 |
| Gelling Catalyst | PC 8 | pbw | 0.7 | 0.7 | 0.7 | 0.7 | 0.7 |
| Water | | % | 1.50 | 1.50 | 1.50 | 1.50 | 1.50 |
| Formulation Ratio & Reaction Rate | Combined Polyether Polyol* | g | 100 | 100 | 100 | 100 | 100 |
| | HFO-1336MZZ | g | 0 | 5 | 10 | 15 | 20 |
| | Cyclopentane | g | 12 | 9 | 6 | 3 | 0 |
| | 44v20L | g | 121 | 121 | 121 | 121 | 121 |
| | Gelling Time | sec | 193 | 194 | 192 | 193 | 191 |
| | Free-rising Density | kg/m³ | 30.1 | 30.4 | 31.0 | 31.6 | 35.9 |
| Flowability | Foam Height | cm | 86.9 | 88.7 | 88.3 | 88.2 | 86 |
| Results of Foam Physical Property Test | Core Density | kg/m³ | 45.6 | 46.7 | 47.9 | 49.0 | 49.5 |
| | Thermal Conductivity, 25°C | mW/m*K | 21.68 | 20.95 | 20.26 | 20.19 | 20.83 |
| | Compressive Strength | ⊥, Kpa | 245.7 | 255.7 | 273.3 | 276.4 | 269.3 |
| | | ⊥, Kpa | 220.3 | 227.1 | 251.3 | 264.3 | 265.7 |
| | | //, Kpa | 261.7 | 278.3 | 295.7 | 307.2 | 318.8 |

As shown in Table 2 (Examples 6-10), for the polyurethane foam containing a blowing agent blend of HFO-1366MZZ and cyclopentane, test results show that the foam prepared from the reaction system comprising 9∼15 pbw of HFO-1366MZZ and 3∼7 pbw of cyclopentane shows better thermal insulation properties and mechanical properties. Specifically, HFO-1336MZZ is present in an amount of 4∼20 pbw, preferably of 5∼15 pbw; and cyclopentane is present in an amount of 2∼10 pbw, preferably of 3∼9 pbw.

| Table 3 -Examples 8-17 | | | | | | | | | | |
|---|---|---|---|---|---|---|---|---|---|---|
| Formulation | | | 8# | 11# | 12# | 13# | 14# | 15# | 16# | 17# |
| | Polyether X | | Arcol Polyol 1011 | Arcol Polyol 1011 | Arcol Polyol 1011 | Arcol Polyol 1011 | Arcol Polyol 1011 | Arcol Polyol 1011 | NJ303E | NJ 303E |
| | | pbw | 10 | 8 | 20 | 12 | 25 | 25 | 10 | 12 |
| Polyether 2 | Desmophen 4030M | pbw | 70 | 82 | | | | | 70 | |
| Polyether 3 | Desmophen Z450 | pbw | 20 | 10 | 30 | 20 | 25 | 35 | 20 | 20 |
| Polyether 4 | NJ4110A | pbw | | | | 20 | | | | 20 |
| Polyether 5 | NJ 635C | pbw | | | 50 | | | 40 | | |
| Polyether 6 | YD4502 | pbw | | | | 48 | 50 | | | 48 |
| Silicone Oil | Niax L6920 | pbw | 2 | 2 | 2 | 2 | 2 | 2 | 2 | 2 |
| Fire Retardant | TCPP | pbw | 10 | 10 | 10 | 10 | 10 | 10 | 10 | 10 |
| Foaming Catalyst | PC5 | | 0 | 0 | 0 | 0 | 0 | 0 | 0.1 | 0 |
| Gelling Catalyst | PC8 | pbw | 0.70 | 0.75 | 0.65 | 0.7 | 0.7 | 0.65 | 0.4 | 0.7 |
| Trimerization Catalyst | Polycat 41 | pbw | 0.3 | 0.3 | 0.3 | 0.3 | 0.3 | 0.3 | 0.3 | 0.3 |
| Water | | % | 1.50 | 1.50 | 1.50 | 1.50 | 1.50 | 1.50 | 1.50 | 1.50 |
| Formulation Ratio | Combined Polyether Polyol** | g | 100 | 100 | 100 | 100 | 100 | 100 | 100 | 100 |
| | Cyclopentane | g | 6 | 6 | 6 | 6 | 6 | 6 | 6 | 6 |
| | HFO-1336MZZ | g | 10 | 10 | 10 | 10 | 10 | 10 | 10 | 10 |
| | 44v201 | g | 121 | 121 | 121 | 121 | 121 | 121 | 121 | 121 |
| Reactivity Test | Temperature | °C | 20 | 20 | 20 | 20 | 20 | 20 | 20 | 20 |
| | Gelling Time | sec | 192 | 207 | 179 | 188 | 182 | 174 | 190 | 183 |
| | Free-rising Density | kg/m³ | 31.0 | 30.9 | 31.2 | 31.1 | 30.8 | 31.1 | 31.2 | 31.0 |
| Flowability | Foam Height | cm | 88.3 | 88.9 | 89.5 | 88.7 | 89.9 | 90.2 | 87.2 | 87.0 |
| Foam Physical Property | Expansion after 18 min | % | 3.1 | 2.77 | 4.26 | 2.08 | 4.05 | 5.55 | 1.98 | 1.3 |
| | Core Density | kg/m³ | 47.9 | 47.6 | 47.3 | 47.2 | 47.9 | 47.7 | 47.8 | 47.5 |
| | Foam Compressive Strength | kPa | 295.7/2 51.3/27 3.3 | 297.8/2 53.7/27 6.4 | 285.7/26 4.5/274. 6 | 297.2/2 58.1/27 3.8 | 284.6/2 45.5/26 5.7 | 281.8/2 50.8/26 4.8 | 297.1/257 .3/275.7 | 293.7/254 .8/270.7 |
| | Yield Point Deformation | % | 7.69/6.5 4/7.73 | 7.25/7.8 4/8.57 | 6.35/7.0 6/7.11 | 8.30/6.8 1/8.12 | 6.96/7.1 7/7.67 | 6.31/7.4 8/8.20 | 8.15/6.69/ 7.94 | 8.54/6.87/ 8.60 |
| | Average Foam Compressive Strength | Kpa | 273.4 | 276.0 | 274.9 | 276.4 | 265.3 | 265.8 | 276.7 | 273.1 |
| | Average Yield Point Deformation | % | 7.32 | 7.89 | 6.84 | 7.75 | 7.27 | 7.33 | 7.59 | 8.00 |
| | Thermal Conductivity, 25°C | mW/M. K | 20.26 | 20.55 | 20.05 | 20.24 | 20.18 | 19.96 | 20.25 | 20.31 |
| | Bonding Strength | kPa | 298.34 | 283.18 | 301.46 | 304.21 | 293.67 | 286.26 | 274.76 | 279.29 |
| Conclusion | It can be seen from the above data that tenacity and bonding properties of the foam can be significantly improved by replacing the polyether started with Gly with the polyether started with Diol in the formulation. | | | | | | | | | |
| Note | All the polyethers in Table 3 refer to polyether polyols; the Combined Polyether Polyol** refer to the mixture of polyol X, 1, 2, 3, 4, 5 and 6, as well as the fire retardant, catalyst, surfactant and water. | | | | | | | | | |

Examples 8-17 listed in Table 3 demonstrate that: by comparing the polyurethane foams prepared from the reaction systems containing difunctional polyether polyols (for example, in Examples 8# and 13#) and trifunctional polyether polyols (for example, in Examples 16# and 17#) respectively, it was found that the reaction systems containing difunctional polyether polyols may better improve the bonding strength of the foam. Furthermore, by comparing the yield point deformations of the two types of foams, it was found that the reaction systems containing difunctional polyether polyols show lower yield point deformations. If the difunctional polyether polyols represent too high percentages in the reaction systems (for example, in Examples 12#, 14# and 15#), the demould performance will be inferior (with longer afterexpansion time), thus being difficult to meet the demands of practical production. If the polyether polyols started with aromatic amines represent too low percentages in the polyurethane foam reaction systems, the foam thus prepared will show high thermal conductivity, thus affecting the thermal insulation performance adversely. If the polyethers with a high functionality represent too low percentages in the reaction systems, the foams thus prepared will have weak strength, thus giving composite panels with poor mechanical strength.

Although the present invention has disclosed with preferred examples hereinabove, it is to be understood that these examples are merely illustrative instead of limiting. Various changes and modifications may be made by those skilled in the art without departing from the spirit and scope of the present invention. Therefore, the protection scope of the present invention should be defined by the claims.

## Claims

1. A polyurethane foam composite panel comprising two surface layers and a polyurethane foam layer located therebetween, wherein the polyurethane foam is prepared from the reaction system comprising the following components:
A) a polyisocyanate;
B) a polyol;
C) a blowing agent comprising HFO-1336MZZ; and
D) catalysts comprising a composite catalyst of foaming catalyst, gelling catalyst and trimerization catalyst, in an amount of 0.80∼3.00 pbw.

2. The composite panel according to claim 1, wherein the polyurethane foam reaction system further comprises water in an amount of 1.0∼3.0 wt%, preferably of 1.5∼2.0 wt%, based on that the total weight of the components except component A) and component C) in the polyurethane foam reaction system is 100 wt%.

3. The composite panel according to claim 1, wherein the NCO content of the component A) polyisocyanate is 20-33 wt.%, preferably 25-32 wt.%, particularly preferably 30-32 wt%, based on that the total weight of the component A) is 100 wt%, the NCO content is measured in accordance with GB/T 12009.4-2016.

4. The composite panel according to claim 1, wherein the component B) polyol comprises:
a difunctional polyether polyol, in an amount of 5∼20 pbw, preferably of 5∼15 pbw, with a viscosity at 25°C of <300 mPa·s, preferably of <200 mPa.s (measured in accordance with GB/T 12008.8-1992);
a polyether polyol with a high functionality and a low hydroxyl value, with a functionality >4, in an amount of 45∼80 pbw, preferably of 50∼75 pbw;
a polyether polyol started with an aromatic amine, in an amount of 10∼35 pbw, preferably of 15∼25 pbw, with a viscosity at 25°C of <30000 mPa·s.

5. The composite panel according to any one of claims 1-4, wherein the component B) polyol has a functionality of 3.5∼6, preferably of 4.0∼5.5, a hydroxyl value of 310∼500 mgKOH/g, preferably of 320∼400 mgKOH/g.

6. The composite panel according to any one of claims 1-4, wherein the blowing agent comprises a mixture of HFO-1336MZZ and cyclopentane, wherein HFO-1336MZZ is present in an amount of 4∼20 pbw, preferably of 5∼15 pbw, and cyclopentane is present in an amount of 2∼10 pbw, preferably of 3∼9 pbw.

7. The composite panel according to any one of claims 1-4, wherein the A) polyisocyanate is polymeric MDI.

8. The composite panel according to any one of claims 1-4, wherein the polyurethane foam layer is 30mm∼200mm in thickness.

9. The composite panel according to any one of claims 1-4, wherein the two surface layers of the composite panel are made of a material selected from Fe, Al, FRP, PS and ABS.

10. The composite panel according to claim 1 or 2, wherein the insulation layer is a microcellular foam, the microcells of which have an average diameter of less than 0.35 mm.

11. The composite panel according to claim 1 or 2, wherein the thermal conductivity of the polyurethane foam is less than 21 mW/M.K (25°C) (measured in accordance with GB3399-1989).

12. The composite panel according to claim 1 or 2, wherein, among the catalysts, the foaming catalyst is selected from one, or any mixture of two or more of the following: pentamethyldiethylene triamine, bis(dimethylamino ethyl)ether, N,N,N',N'-tetramethylethylenediamine, N,N,N' ,N'-tetramethylbutanediamine and tetramethylhexanediamine; the gelling catalyst is selected from one or any mixture of the following: dimethylcyclohexylamine and dimethylbenzylamine; the trimerization catalyst is selected from one, or any mixture of two or more of the following: methylammonium salts, ethylammonium salts, octylammonium salts or hexahydrotriazine and organic metal bases.

13. A method for producing the polyurethane foam composite panel according to any one of claims 1-12 comprising the following steps:
fixing the two surface layers; and
injecting the polyurethane reaction mixture between the two surface layers, wherein the polyurethane components react and foams to form the polyurethane foam composite panel.

14. The method according to claim 13, wherein the two surface layers are fixed with a mold comprising a upper cap and a bottom cap, and the two surface layers are fixed to the inner surfaces of the upper cap and the bottom cap respectively.

15. Use of the polyurethane foam composite panel according to any one of claims 1-12 in preparation of reefer/trailer.

16. A reefer/trailer comprising the polyurethane foam composite panel according to any one of claims 1-12.
